# EUROPEAN PATENT SPECIFICATION

(11) **EP 3 808 709 B1**
(45) Date of publication and mention of the grant of the patent: **09.02.2022**
(21) Application number: 19203047.6
(22) Date of filing: 14.10.2019
(51) Int. Cl.: C02F 1/461, C02F 1/467

(54) **WATER DISINFECTION BY ELECTROLYSIS**
WASSERDESINFEKTION DURCH ELEKTROLYSE
DÉSINFECTION DE L'EAU PAR ÉLECTROLYSE

(43) Date of publication of application: 21.04.2021
(73) Proprietor: Aguabel bv, 8720 Dentergem (BE)
(72) Inventor: DECLERCQ, Johan, 8750 Wingene (BE); DESTOOP, Edouard, 8792 Desselgem (BE)
(74) Representative: IPLodge bv

(56) References cited:
- US-A- 4 129 493
- US-A- 5 567 283
- US-A1- 2014 116 889

## Description

### Technical Field

The present invention relates to the field of sanitization of water. The present invention specifically relates to a device for disinfecting water, and a related method.

### Background Art

In various applications, a need exists for sanitizing water. For example, in a water holding receptacle of a bathing unit, such as a spa, a pool, a bath, a hot tub and the like, sanitary conditions need to be maintained. In such bathing units, water is typically filtered to remove undesirable matter from water. Furthermore, chemical agents are typically added to the water to maintain hygienic conditions, for example to prevent the proliferation of algae and/or bacteria. It is well-known in the art to use halogens, such as chlorine and bromine, for their antiviral, fungicidal and bactericidal properties. These halogens are highly reactive due to their high electronegativity and high effective nuclear charge, and therefore harmful or lethal to biological organisms or entities, i.e. particularly to microscopic live and non-living assemblies (viruses) that lack the intricate defense and repair mechanisms of complex multicellular organisms.

While halogen disinfection of bathing water is a typical example, the same approach can be used for biological sanitation in a wide range of applications. For example, in industrial processes, a need may exist to sanitize water. Even if such an industrial process does not strictly require sanitized water, waste products may need to be treated to avoid spreading diseases, particularly when tepid water or cool steam are disposed. It shall also be evident that, by their very nature, food processing, in a kitchen or food processing plant, medical facilities, veterinary practices, livestock breeding facilities, and particularly intensive breeding facilities, zoos, kennels and stables may have a frequent need for disinfected or disinfecting water, e.g. for cleaning purposes.

It is known that the free halogens, which are particularly suitable for biological disinfection purposes, can be efficiently produced on-demand as the anolyte obtained by electrochemical activation of salts, such as sodium chloride solutions. Therefore, devices to sanitize water are known in the art that comprise an electrolytic cell configured to release a free halogen in the water by electrolysis of a salt solution. In operation, an electrical current passes through the cell, i.e. over a cathode and an anode, to achieve this electrolysis.

This approach provides a convenient and economical alternative to manually treating the water with dangerous, toxic and/or poisonous chemicals, such as liquid sodiumhyperchlorite solutions or powdered chlorine products, and thus avoiding the risks involved in storing such chemicals. Furthermore, a sensor can be used to monitor the halogen concentration, such that the electrolytic cell can be automatically controlled to maintain the concentration in an optimal range.

The European patent EP 0377131 discloses a process and device for disinfecting water, in particular water from swimming pools, using a disinfectant agent. The disinfectant is produced when required by an electrolysis device. The anolyte and the catholyte are taken separately from, respectively, the anode and cathode space, and the spent anolyte is entirely disposed into the sewer, after being neutralized with the spent catholyte.

The United States patent application US 4,500,404 discloses a chlorine generating apparatus that generates chlorine gas or sodium hyperchlorite from a brine solution. The apparatus is conveniently implemented as a freestanding unit suitable for use in combination with a backyard swimming pool. The unit comprises a tank in which a concentrated brine solution is maintained. Tap water is drawn through a water softening means and supplied to an electrolysis cell that is submerged in the brine solution. The electrolysis cell comprises a cathode section and an anode section, which are separated by an ion selective membrane. The ion selective membrane allows sodium and hydrogen ions to pass from the anode to the cathode side of the cell. Thus, sodium hydroxide and hydrogen are generated and collected in the cathode section, and chlorine gas in the anode section. The cathode section draws water from the water softener, and the anode section draws water from the bottom of the brine tank. The chlorine gas is separated from the brine solution and enters a manifold where it combines with the hydroxide solution from the cathode side and is dispensed to the swimming pool in the form of sodium hyperchlorite.

### Summary of the invention

It is an objective of the present invention to provide good, efficient, cost-effective and/or reliable sanitization of water by in-situ generated halogens.

It is an advantage of embodiments of the present invention that a halogen, such as chlorine, and its sterilizing by-products can be generated directly from a salt solution, such as a concentrated brine solution, to dispense them into a water reservoir, e.g. a swimming pool, for sterilization purposes.

It is an advantage of embodiments of the present invention that water can be sanitized, e.g. sterilized and/or cleared of biological contaminants, in situ and/or on a continuous basis, or at least frequently, e.g. steadily, and/or consistently and/or without requiring intensive supervision and/or manual operation.

It is an advantage of embodiments of the present invention that sanitation and protection are provided without requiring the storage of toxic or harmful chemicals.

It is an advantage of embodiments of the present invention that a device for water sanitization in accordance with embodiments of the present invention can be easily installed, configured and operated, e.g. without requiring specific training and/or specific skills.

It is an advantage of embodiments of the present invention that a device for water sanitization in accordance with embodiments of the present invention can be easily and/or efficiently and/or cost-effectively manufactured.

It is an advantage of embodiments of the present invention that a device for water sanitization in accordance with embodiments of the present invention can be easily maintained and/or repaired.

In a first aspect, the present invention relates to a device for disinfecting water. The device comprises a water container for storing water to be disinfected; an electrolytic cell comprising an anode chamber and a cathode chamber separated by an ion-permeable membrane; a salt container adapted for dissolving a salt, when stored in the salt container, in water received from the water container to obtain a salt solution and for feeding said salt solution to said anode chamber; a caustic base container, operably coupled to said cathode chamber to store a caustic base extracted from said cathode chamber; a mixing chamber in fluid communication with said water container and said anode chamber, such that water from the water container is, in operation of the device, mixed with and disinfected by a disinfectant compound formed in the anode chamber by electrolysis of the salt solution; an inlet for receiving water to be disinfected and for adding the received water to said water container, and an outlet for providing disinfected water extracted from the mixing chamber. The cathode chamber and the caustic base container are integrally formed in (by; from) a first monolithic structural element, and the anode chamber and the mixing chamber are integrally formed in (by; from) a second monolithic structural element. The first monolithic structural element and the second monolithic structural element are adapted for being removably fastened to each other, such as to clamp the ion-permeable membrane between the first monolithic structural element and the second monolithic structural element, i.e. between the anode chamber and the cathode chamber, and such as to allow access to the ion-permeable membrane by separating the first monolithic structural element and the second monolithic structural element (when these were fastened to each other).

In a device in accordance with embodiments of the present invention, the water container and/or the salt container may be formed in the first monolithic structural element, or in the second monolithic structural element, or may be formed by complementary parts in the first monolithic structural element and the second monolithic structural element that, together, form the water container and/or the salt container when the structural elements are fastened to each other.

In a device in accordance with embodiments of the present invention, the first monolithic structural element and the second monolithic structural element may be fabricated by injection molding.

A device in accordance with embodiments of the present invention may comprise a venturi tube segment for receiving a water flow from a first end of said venturi tube segment to a second end of said venturi tube segment, the venturi tube segment being coupled to said inlet such that the inlet is fed by the flow in the venturi tube segment and said venturi tube segment being coupled to said outlet such that disinfected water from the outlet is merged back into the flow in the venturi tube segment, and such that a flow of water from the venturi tube segment to the inlet and a flow of water from the outlet to the venturi tube segment is being driven by a pressure gradient caused by the venturi effect.

A device in accordance with embodiments of the present invention may comprise a pump to pump the caustic base from the cathode chamber to the caustic base container.

A device in accordance with embodiments of the present invention may comprise a caustic fluid conduit operably connecting the caustic base container to the mixing chamber to mix caustic base fluid stored in the caustic base container with the disinfected water in the mixing chamber.

In a device in accordance with embodiments of the present invention, the caustic fluid conduit may comprise a pump to pump the caustic base fluid from the caustic base container to the mixing chamber.

In a device in accordance with embodiments of the present invention, the salt may be a halogen salt, a chloride salt, a fluoride salt, a sodium salt, a potassium salt, and/or sodium chloride, preferably sodium chloride of high purity, e.g. at least 99% purity, e.g. at least 99.9% purity.

A device in accordance with embodiments of the present invention may comprise a float valve to maintain a water level in the water container at a predetermined target level by blocking a water supply via the inlet when said water level reaches or exceeds said predetermined target level.

In a device in accordance with embodiments of the present invention, the inlet and/or the outlet may comprise one or more check valves.

In a device in accordance with embodiments of the present invention, the electrolytic cell may comprise an anode, positioned in the anode chamber, and a cathode, positioned in the cathode chamber.

A device in accordance with embodiments of the present invention may comprise a conduit connecting the salt container to the anode chamber to transport the salt solution by passive flow from the salt container to the anode chamber.

A device in accordance with embodiments of the present invention may comprise a further conduit to allow an electrolyte to flow from the anode chamber to the cathode chamber and to maintain a fluid balance between the anode chamber and the cathode chamber.

A device in accordance with embodiments of the present invention may comprise a gas outlet connected to the cathode chamber to vent hydrogen gas from the cathode chamber.

In a second aspect, the present invention relates to a method for fabricating a device for disinfecting water. The method comprises:
- forming a cathode chamber and a caustic base container in a first monolithic structural element;
- forming an anode chamber and a mixing chamber in a second monolithic structural element;
- installing a cathode in the cathode chamber;
- installing an anode in the anode chamber;
- clamping an ion-permeable membrane between the cathode chamber in the first monolithic structural element and the anode chamber in the second monolithic structural element such that an electrolytic cell is formed;
- providing a water container for storing water to be disinfected;
- providing a salt container;
- connecting the salt container to the water container such that a salt, when stored in the salt container, is dissolved in water received from the water container to obtain a salt solution;
- connecting the salt container to the anode chamber to feed the salt solution to the anode chamber;
- connecting the caustic base container to the cathode chamber to store a caustic base extracted from the cathode chamber;
- connecting the mixing chamber to the water container and to the anode chamber, such that water from the water container is, in operation of the device, mixed with and disinfected by a disinfectant compound formed in the anode chamber by electrolysis of the salt solution;
- providing an inlet for receiving water to be disinfected and for adding the received water to said water container, and
- providing an outlet for providing disinfected water extracted from the mixing chamber.

### Brief Description of the Drawings

FIG 1 illustrates a device in accordance with embodiments of the present invention.
FIG 2 schematically illustrates features of a device in accordance with embodiments of the present invention.

### Detailed description of the invention

In a first aspect, the present invention relates to a device for disinfecting water. The device comprises a water container and a salt container. The device comprises an electrolytic cell comprising an anode chamber and a cathode chamber separated by an ion-permeable membrane. The salt container is adapted for dissolving a salt stored in the salt container in water received from the water container to obtain a salt solution, and to feed the salt solution to the anode chamber. The device comprises a caustic base container, operably coupled to the cathode chamber to store a caustic base extracted from the cathode chamber. The device comprises a mixing chamber in fluid communication with the water container and the anode chamber, such that water from the water container is mixed with and disinfected by a disinfectant compound formed in the anode chamber. The device further comprises an inlet for receiving polluted water and adding the received polluted water to the water reservoir, and an outlet for providing disinfected water extracted from the mixing chamber.

The cathode chamber and the caustic base container are integrally formed in (i.e. by) a first monolithic structural element, and the anode chamber and the mixing chamber are integrally formed in (i.e. by) a second monolithic structural element. The first monolithic structural element and the second monolithic structural element are removably fastened to each other, such as to clamp the ion-permeable membrane between the first monolithic structural element and the second monolithic structural element, and such as to allow access to the ion-permeable membrane by separating the first monolithic structural element and the second monolithic structural element to maintain and/or replace the ion-permeable membrane.

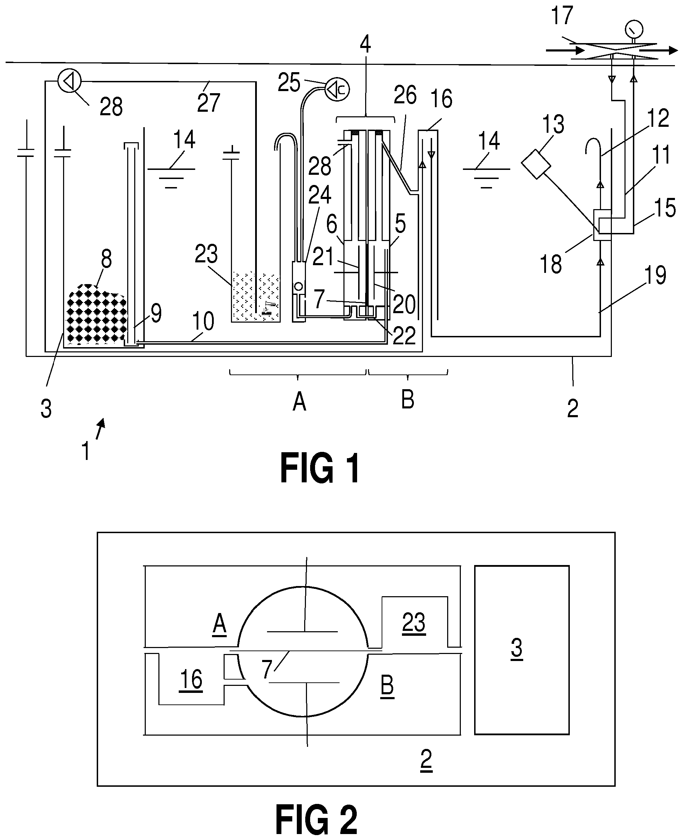

Referring to FIG 1, an exemplary device 1 for disinfecting water in accordance with embodiments of the present invention is schematically illustrated.

The device 1 comprises a water container 2 for storing water to be disinfected, e.g. "polluted" water. The term "polluted" merely refers to the potential presence of biological contaminants to be removed by the disinfection process when present.

The device 1 comprises an inlet 11 for receiving polluted water and adding the received polluted water to the water reservoir, e.g. via a conduit 12. The device may comprise a float valve 13, e.g. a ballcock, to maintain the water level in the water reservoir at a predetermined target level 14, e.g. to block the supply via the inlet 11 when the level in the water reservoir reaches or exceeds the predetermined target level. The inlet may also comprise a check valve (e.g. retention valve) to prevent water to flow back from the water reservoir toward the inlet.

The device 1 comprises an outlet 15 for providing disinfected water extracted from the mixing chamber 16, e.g. via the conduit 19. The outlet may also comprise a check valve (e.g. retention valve) to prevent water to flow back from the outlet toward the mixing chamber.

In a preferred embodiment, the device 1 comprises a venturi tube segment 17. It is an advantage that such venturi tube segment can be easily installed in a water circuit, such as a water circulation circuit of a bathing unit. The venturi effect may be used to create a pressure gradient, such that the inlet 11 is fed by the flow in the venturi tube segment and disinfected water from the outlet 12 is merged back into the flow in the venturi tube segment. The check valves of the inlet 11 and the outlet 15 may be implemented as a double valve 18 at the interstice between a secondary flow circuit connected at either end to the venturi tube segment 17 and the inlet conduit 12 and the outlet conduit 19. Thus, a relatively lower pressure, e.g. a vacuum pressure, generated by the venturi tube segment may extract water from the mixing chamber 16 via the outlet conduit 19.

While such venturi tube segment interface at the inlet and outlet of the device 1 may be particularly advantageous, e.g. by providing an efficient flow in and out of the device, by being easy to install in a pre-existing water circuit, and/or by being particularly simple and low in maintenance, embodiments of the present invention are not necessarily limited thereto. For example, one or more pumps may be comprised in the device to drive the flow of water into and out of the device.

The device 1 comprises a salt container 3. The salt container 3 is adapted for storing a salt 8. Preferably, the salt is a halogen salt, and even more preferred, a sodium or potassium salt. For example, the salt container may be adapted for storing sodium chloride, preferably of a purity of at least 99%, e.g. at least 99.9%.

The salt container 3 is adapted for dissolving the salt 8 stored in the salt container in water received from the water container to obtain a salt solution. For example, the salt container 3 may receive water from the water container 2 by passive fluid communication. For example, the salt container 3 may be at least partially submerged in the water contained in the water container, and an opening or conduit may allow water to flow from the water container. Alternatively, a conduit may passively bring water from the water container to the salt container. Alternatively, a pump may actively pump water from the water container to the salt container. The salt container may be open, e.g. via a second opening or conduit, to allow gas, e.g. air, to flow out of the salt container, to equalize pressure between the salt container and the water container. Thus, the salt 8, when brought in contact with the water, forms a brine (i.e. water strongly impregnated with the salt, which may be NaCI salt, without embodiments being necessarily limited thereto). The salt solution, e.g. a saturated salt solution, may be separated from the solid salt by a solid/liquid separator 9, e.g. a brine tube.

The device 1 comprises an electrolytic cell 4 comprising an anode chamber 5 and a cathode chamber 6 separated by an ion-permeable membrane 7.

As is well-known in the art, such electrolytic cell comprises an anode 20, positioned in the anode chamber 5, and a cathode 21, positioned in the cathode chamber 6. As shall be evident, the device may comprise a power supply and/or a battery, electrical connectors, a control unit and/or other supporting electronics to supply a suitable voltage over the anode and the cathode in operation of the device.

The salt container 3 is adapted for feeding the salt solution to the anode chamber 5. For example, a conduit 10 may connect the salt container 3, e.g. a solid/liquid separator 9 component thereof, to the anode chamber 5 to allow the salt solution (i.e. the electrolyte) to flow, e.g. passively, from the salt container 3 to the anode chamber 5. This fluid transport of the salt solution may be passive, e.g. driven by hydrostatic force, or active, e.g. driven by a pump.

A further conduit 22, may be included in the device 1 to allow the electrolyte to flow from the anode chamber 5 to the cathode chamber 6, to maintain a fluid balance between the anode chamber and the cathode chamber.

Hydrogen may be vented from the cathode chamber 6 via a gas outlet 28. For example, the hydrogen may be advantageously used in an external process, e.g. a chemical process or in an energy generation process. Alternatively, the hydrogen may be vented into the atmosphere or burned off.

The device 1 also comprises a caustic base container 23, e.g. a lye container, operably coupled to the cathode chamber 6 to store a caustic base, e.g. caustic soda, extracted from the cathode chamber 6.

The device may comprise a pump 24, e.g. a lye pump, to pump the caustic base from the cathode chamber 6 to the caustic base container 23. For example, such pump 24 may be driven by a compressor 25.

The device comprises a mixing chamber 16 in fluid communication with the water container 2 and the anode chamber 5, such that water from the water container 2 is mixed with and disinfected by a disinfectant compound, e.g. a halogen or halogen compound, e.g. chlorine, formed in the anode chamber by electrolysis of the salt solution. For example, the device may comprise a fluid conduit 26 that connects the anode chamber 5 with the mixing chamber 16

As already mentioned hereinabove, the outlet 19 collects the disinfected water from the mixing chamber 16. The mixing chamber 16 may be formed as an open-ended chamber, e.g. a mixing tube with an open end and a closed end, in which the open end is directed downward and submerged in the water reservoir. The outlet conduit 19 may collect the disinfected water from within the mixing chamber 16 at a suction point near the closed end, i.e. near the upper end, such that removal of water from the mixing chamber 16 via the outlet conduit 19 creates a pressure gradient that replaces the expunged water with water from the water reservoir 2 via the open end of the mixing chamber, i.e. the bottom end.

A device 1 in accordance with embodiments of the present invention may comprise a caustic fluid conduit 27 operably connecting the caustic base container 23, e.g. the lye container, to the mixing chamber 16, to mix caustic base fluid, e.g. caustic soda, stored in the caustic base container 23 with the disinfected water in the mixing chamber 16. Thus, the disinfectant halogen or halogen compound that was not spent to disinfect biological contaminants in the water can be neutralized by the caustic base. For example, the caustic fluid conduit 27 may comprise a pump 28 to pump the caustic base fluid from the caustic base container 23 to the mixing chamber 16. It is an advantage that the flow rate of the pump 28 may be regulated to obtain a predetermined concentration of the halogen or halogen compound in the water extracted via the outlet 15. For example, the remaining disinfectant compound may be completely or substantially completely neutralized by admixing a corresponding quantity of the caustic base fluid, or may be controlled at a predetermined concentration level (different from zero or near-zero), if this is desirable for a specific application.

Referring to FIG 2, the cathode chamber 6 and the caustic base container 23 are integrally formed in a first monolithic structural element A, and the anode chamber 5 and the mixing chamber 16 are integrally formed in a second monolithic structural element B. The first monolithic structural element A and the second monolithic structural element B are removably fastened to each other, such as to clamp the ion-permeable membrane 7 between the cathode chamber 6 and the anode chamber 5, i.e. between the first monolithic structural element A and the second monolithic structural element B, and such as to allow access to the ion-permeable membrane by separating the first monolithic structural element and the second monolithic structural element to maintain and/or replace the ion-permeable membrane. Furthermore, this may also allow easy access to the electrodes. The ion-permeable membrane may be the most sensitive part of the device in terms of maintenance requirements, and therefore allowing easy access to the membrane may be particularly advantageous.

Optionally, the mixing chamber may be formed by an open cavity in the second monolithic structural element B that is closed off by a wall of the first monolithic structural element A when the structural elements A, B are clamped together. Optionally, the caustic base container may be formed by an open cavity in the first monolithic structural element A that is closed off by a wall of the second monolithic structural element B when the structural elements A, B are clamped together. Thus, the mixing chamber 16 and/or the caustic base container 23 may also be easily cleaned or otherwise maintained.

The device may comprise suitable clamping means, such as nuts, bolts, tensioners and the like. The device may also comprise suitable resilient sealing rings to clamp between the first and the second structural element, or similar sealant means, to ensure that the chambers are sealed watertight when clamped together.

Furthermore, the water reservoir 2 and/or the salt reservoir 3 may, optionally, also be formed in the first monolithic structural element A, in the second monolithic structural element B, or by complementary parts in the first monolithic structural element A and the second monolithic structural element B that, together, form the water reservoir 2 and/or the salt reservoir 3 when the structural elements A,B are clamped together.

Advantageously, the first and the second monolithic structural element A, B may be efficiently and cost-effectively fabricated, e.g. by injection molding.

In a second aspect, the present invention relates to a method for fabricating a device for disinfecting water. The method comprises forming a cathode chamber and a caustic base container in a first monolithic structural element, and forming an anode chamber and a mixing chamber in a second monolithic structural element. The method comprises installing a cathode in the cathode chamber and installing an anode in the anode chamber. The method comprises clamping an ion-permeable membrane between the cathode chamber in the first monolithic structural element and anode chamber in the second monolithic structural element such that an electrolytic cell is formed. The method further comprises providing a water container for storing water to be disinfected. The method comprises providing a salt container and connecting the salt container to the water container such that a salt, when stored in the salt container, is dissolved in water received from the water container to obtain a salt solution. The method comprises connecting the salt container to the anode chamber to feed the salt solution to the anode chamber. The method comprises connecting the caustic base container to the cathode chamber to store a caustic base extracted from the cathode chamber. The method comprises connecting the mixing chamber to the water container and the anode chamber, such that water from the water container is, in operation of the device, mixed with and disinfected by a disinfectant compound formed in the anode chamber by electrolysis of the salt solution. The method further comprises providing an inlet for receiving water to be disinfected and for adding the received water to said water container and an outlet for providing disinfected water extracted from the mixing chamber.

In a method in accordance with embodiments of the present invention, the water container and/or the salt container may be formed in the first monolithic structural element, or in the second monolithic structural element, or may be formed by complementary parts in the first monolithic structural element and the second monolithic structural element that, together, form the water container and/or the salt container when the structural elements are fastened to each other.

In a method in accordance with embodiments of the present invention, the first monolithic structural element and the second monolithic structural element may be fabricated by injection molding.

In alternative embodiments, the first and/or second monolithic structural element may be fabricated by removing material from a slab, such as by drilling and/or milling.

A method in accordance with embodiments of the present invention may comprise providing a venturi tube segment for receiving a water flow from a first end of said venturi tube segment to a second end of said venturi tube segment, connecting the venturi tube segment to the inlet such that the inlet is fed by the flow in the venturi tube segment, and connecting the venturi tube segment to the outlet such that disinfected water from the outlet is merged back into the flow in the venturi tube segment.

A method in accordance with embodiments of the present invention may comprise installing a pump to pump the caustic base from the cathode chamber to the caustic base container.

A method in accordance with embodiments of the present invention may comprise providing a caustic fluid conduit operably connecting the caustic base container to the mixing chamber to mix caustic base fluid stored in the caustic base container with the disinfected water in the mixing chamber.

A method in accordance with embodiments of the present invention may comprise providing a float valve to maintain a water level in the water container at a predetermined target level by blocking a water supply via the inlet when said water level reaches or exceeds said predetermined target level.

A method in accordance with embodiments of the present invention may comprise providing a conduit connecting the salt container to the anode chamber to transport the salt solution by passive flow from the salt container to the anode chamber.

A method in accordance with embodiments of the present invention may comprise providing a further conduit to allow an electrolyte to flow from the anode chamber to the cathode chamber and to maintain a fluid balance between the anode chamber and the cathode chamber.

A method in accordance with embodiments of the present invention may comprise providing a gas outlet connected to the cathode chamber to vent hydrogen gas from the cathode chamber.

Where the present invention is described hereinabove with reference to specific embodiments of a device and specific embodiments of a method for fabricating such device, this is solely for the sake of clarification and not to be construed as limiting the invention. The skilled person will understand that options and features only described with reference to the device also apply to the method and vice versa.

## Claims

1. A device (1) for disinfecting water, the device comprising:
- a water container (2) for storing water to be disinfected;
- an electrolytic cell (4) comprising an anode chamber (5) and a cathode chamber (6) separated by an ion-permeable membrane (7);
- a salt container (3) adapted for dissolving a salt (8), when stored in the salt container, in water received from the water container to obtain a salt solution and for feeding said salt solution to said anode chamber (5);
- a caustic base container (23), operably coupled to said cathode chamber (6) to store a caustic base extracted from said cathode chamber (6);
- a mixing chamber (16) in fluid communication with said water container (2) and said anode chamber (5), such that water from the water container (2) is, in operation of the device, mixed with and disinfected by a disinfectant compound formed in the anode chamber by electrolysis of the salt solution;
- an inlet (11) for receiving water to be disinfected and for adding the received water to said water container (2), and
- an outlet (15) for providing disinfected water extracted from the mixing chamber (16),
wherein said cathode chamber (6) and said caustic base container (23) are integrally formed in a first monolithic structural element (A),
wherein said anode chamber (5) and said mixing chamber (16) are integrally formed in a second monolithic structural element (B),
wherein said first monolithic structural element (A) and said second monolithic structural element (B) are adapted for being removably fastened to each other, such as to clamp the ion-permeable membrane (7) between the first monolithic structural element (A) and the second monolithic structural element (B), and such as to allow access to the ion-permeable membrane (7) by separating the first monolithic structural element and the second monolithic structural element when fastened to each other.

2. The device of claim 1, wherein said water container (2) and/or said salt container (3) are formed in the first monolithic structural element (A), or in the second monolithic structural element (B), or are formed by complementary parts in the first monolithic structural element (A) and the second monolithic structural element (B) that, together, form the water container (2) and/or the salt container (3) when the structural elements (A,B) are fastened to each other.

3. The device of any of the previous claims, wherein said first monolithic structural element (A) and said second monolithic structural element (B) are fabricated by injection molding.

4. The device of any of the previous claims, comprising a venturi tube segment (17) for receiving a water flow from a first end of said venturi tube segment to a second end of said venturi tube segment, said venturi tube segment (17) being coupled to said inlet (11) such that the inlet (11) is fed by the flow in the venturi tube segment and said venturi tube segment (17) being coupled to said outlet (15) such that disinfected water from the outlet (12) is merged back into the flow in the venturi tube segment, and such that a flow of water from the venturi tube segment (17) to the inlet (11) and a flow of water from the outlet (15) to the venturi tube segment (17) is being driven by a pressure gradient caused by the venturi effect.

5. The device of any of the previous claims, comprising a pump (24) to pump the caustic base from the cathode chamber (6) to the caustic base container (23).

6. The device of any of the previous claims, comprising a caustic fluid conduit (27) operably connecting the caustic base container (23) to the mixing chamber (16) such as to mix caustic base fluid stored in the caustic base container (23) with the disinfected water in the mixing chamber (16).

7. The device of any of the previous claims, wherein said caustic fluid conduit (27) comprises a pump (28) to pump the caustic base fluid from the caustic base container (23) to the mixing chamber (16).

8. The device of any of the previous claims, wherein said salt is a halogen salt, a chloride salt, a fluoride salt, a sodium salt, a potassium salt, and/or sodium chloride.

9. The device of any of the previous claims, comprising a float valve (13) to maintain a water level in the water container (2) at a predetermined target level (14) by blocking a water supply via the inlet (11) when said water level reaches or exceeds said predetermined target level.

10. The device of any of the previous claims, wherein said inlet (11) and/or said outlet (15) comprises a check valve.

11. The device of any of the previous claims, wherein said electrolytic cell comprises an anode (20), positioned in the anode chamber (5), and a cathode (21), positioned in the cathode chamber (6).

12. The device of any of the previous claims, comprising a conduit (10) connecting the salt container (3) to the anode chamber (5) to transport the salt solution by passive flow from the salt container (3) to the anode chamber (5).

13. The device of any of the previous claims, comprising a further conduit (22) to allow an electrolyte to flow from the anode chamber (5) to the cathode chamber (6) and to maintain a fluid balance between the anode chamber and the cathode chamber.

14. The device of any of the previous claims, comprising a gas outlet (28) connected to the cathode chamber (6) to vent hydrogen gas from the cathode chamber.

15. A method for fabricating a device for disinfecting water, the method comprising:
- forming a cathode chamber and a caustic base container in a first monolithic structural element;
- forming an anode chamber and a mixing chamber in a second monolithic structural element;
- installing a cathode in the cathode chamber;
- installing an anode in the anode chamber;
- clamping an ion-permeable membrane between the cathode chamber in the first monolithic structural element and the anode chamber in the second monolithic structural element such that an electrolytic cell is formed;
- providing a water container for storing water to be disinfected;
- providing a salt container;
- connecting the salt container to the water container such that a salt, when stored in the salt container, is dissolved in water received from the water container to obtain a salt solution;
- connecting the salt container to the anode chamber to feed the salt solution to the anode chamber;
- connecting the caustic base container to the cathode chamber to store a caustic base extracted from the cathode chamber;
- connecting the mixing chamber to the water container and to the anode chamber, such that water from the water container is, in operation of the device, mixed with and disinfected by a disinfectant compound formed in the anode chamber by electrolysis of the salt solution;
- providing an inlet for receiving water to be disinfected and for adding the received water to said water container, and
- providing an outlet for providing disinfected water extracted from the mixing chamber.

## Patentansprüche

1. Vorrichtung (1) zum Desinfizieren von Wasser, wobei die Vorrichtung umfasst:
- einen Wasserbehälter (2) zum Speichern von zu desinfizierendem Wasser;
- eine Elektrolysezelle (4) mit einer Anodenkammer (5) und einer Kathodenkammer (6), die durch eine ionendurchlässige Membran (7) getrennt sind;
- einen Salzbehälter (3) zum Auflösen eines Salzes (8), wenn es in dem Salzbehälter aufbewahrt wird, in Wasser, das von dem Wasserbehälter aufgenommen wird, um eine Salzlösung zu erhalten, und zum Zuführen der Salzlösung zu der Anodenkammer (5);
- einen Alkalibasenbehälter (23), der betriebsfähig mit der Kathodenkammer (6) verbunden ist, um eine Alkalibasen zu speichern, die aus der Kathodenkammer (6) entnommen wurde;
- eine Mischkammer (16) in Fluidverbindung mit dem Wasserbehälter (2) und der Anodenkammer (5), so dass Wasser aus dem Wasserbehälter (2) im Betrieb der Vorrichtung mit einer im Anodenraum durch Elektrolyse der Salzlösung gebildeten Desinfektionsverbindung vermischt und desinfiziert wird;
- einen Einlass (11) zum Aufnehmen von zu desinfizierendem Wasser und zum Einfüllen des aufgenommenen Wassers in den Wasserbehälter (2), und
- einen Auslass (15) zum Bereitstellen von desinfiziertem Wasser, das aus der Mischkammer (16) entnommen wird,
wobei die Kathodenkammer (6) und der Alkalibasisbehälter (23) einstückig in einem ersten monolithischen Strukturelement (A) gebildet sind,
wobei die Anodenkammer (5) und die Mischkammer (16) einstückig in einem zweiten monolithischen Strukturelement (B) ausgebildet sind,
wobei das erste monolithische Strukturelement (A) und das zweite monolithische Strukturelement (B) lösbar aneinander befestigt werden können, um die ionendurchlässige Membran (7) zwischen dem ersten monolithischen Strukturelement (A) und dem zweiten monolithischen Strukturelement (B) einzuspannen und den Zugang zur ionendurchlässigen Membran (7) durch Trennen des ersten monolithischen Strukturelements und des zweiten monolithischen Strukturelements, wenn sie aneinander befestigt sind, zu erlauben.

2. Vorrichtung nach Anspruch 1, wobei der Wasserbehälter (2) und/oder der Salzbehälter (3) in dem ersten monolithischen Strukturelement (A) oder in dem zweiten monolithischen Strukturelement (B) gebildet sind oder durch komplementäre Teile in dem ersten monolithischen Strukturelement (A) und dem zweiten monolithischen Strukturelement (B) gebildet werden, die zusammen den Wasserbehälter (2) und/oder den Salzbehälter (3) bilden, wenn die Strukturelemente (A, B) aneinander befestigt sind.

3. Vorrichtung nach einem der vorhergehenden Ansprüche, wobei das erste monolithische Strukturelement (A) und das zweite monolithische Strukturelement (B) durch Spritzgießen hergestellt sind.

4. Vorrichtung nach einem der vorhergehenden Ansprüche, umfassend ein Venturirohrsegment (17) zum Aufnehmen eines Wasserstroms von einem ersten Ende des Venturirohrsegments zu einem zweiten Ende des Venturirohrsegments, wobei das Venturirohrsegment (17) an den Einlass (11) gekoppelt ist, so dass der Einlass (11) von der Strömung im Venturirohrsegment gespeist wird und das Venturirohrsegment (17) mit dem Auslass (15) gekoppelt ist, so dass desinfiziertes Wasser aus dem Auslass (12) wieder in die Strömung im Venturirohrsegment übergeht, und dass ein Wasserstrom vom Venturirohrsegment (17) zum Einlass (11) und ein Wasserstrom vom Auslass (15) zum Venturirohrsegment (17) von einem Druckgradienten angetrieben wird, der durch den Venturi-Effekt verursacht wird.

5. Vorrichtung nach einem der vorhergehenden Ansprüche, die eine Pumpe (24) umfasst, um die Laugenbasis aus der Kathodenkammer (6) in den Laugenbasisbehälter (23) zu pumpen.

6. Vorrichtung nach einem der vorhergehenden Ansprüche, die eine Ätzflüssigkeitsleitung (27) umfasst, die den Ätzbasisbehälter (23) betriebsmäßig mit der Mischkammer (16) verbindet, um in dem Ätzgrundflüssigkeitsbehälter (23) gespeicherte Ätzgrundflüssigkeit mit dem desinfizierten Wasser in der Mischkammer (16) zu mischen.

7. Vorrichtung nach einem der vorhergehenden Ansprüche, wobei die Ätzflüssigkeitsleitung (27) eine Pumpe (28) umfasst, um die Ätzgrundflüssigkeit aus dem Ätzgrundbehälter (23) in die Mischkammer (16) zu pumpen.

8. Vorrichtung nach einem der vorhergehenden Ansprüche, wobei das Salz ein Halogensalz, ein Chloridsalz, ein Fluoridsalz, ein Natriumsalz, ein Kaliumsalz und/oder Natriumchlorid ist.

9. Vorrichtung nach einem der vorhergehenden Ansprüche, umfassend ein Schwimmerventil (13), um einen Wasserstand im Wasserbehälter (2) auf einem vorbestimmten Zielpegel (14) zu halten, indem eine Wasserzufuhr über den Einlass (11) blockiert wird, wenn der Wasserstand den vorbestimmten Zielwert erreicht oder überschreitet.

10. Vorrichtung nach einem der vorhergehenden Ansprüche, wobei der Einlass (11) und/oder der Auslass (15) ein Rückschlagventil umfassen.

11. Vorrichtung nach einem der vorhergehenden Ansprüche, wobei die Elektrolysezelle eine Anode (20) umfasst, die in der Anodenkammer (5) positioniert ist, und eine Kathode (21), die in der Kathodenkammer (6) positioniert ist.

12. Vorrichtung nach einem der vorhergehenden Ansprüche, umfassend eine Leitung (10), die den Salzbehälter (3) mit der Anodenkammer (5) verbindet, um die Salzlösung durch passive Strömung vom Salzbehälter (3) in die Anodenkammer (5) zu transportieren.

13. Vorrichtung nach einem der vorhergehenden Ansprüche, umfassend eine weitere Leitung (22), um zu ermöglichen, dass ein Elektrolyt von der Anodenkammer (5) zur Kathodenkammer (6) strömt, und um ein Flüssigkeitsgleichgewicht zwischen der Anodenkammer und der Kathodenkammer beizubehalten.

14. Vorrichtung nach einem der vorhergehenden Ansprüche, umfassend einen Gasauslass (28), der mit der Kathodenkammer (6) verbunden ist, um Wasserstoffgas aus der Kathodenkammer abzulassen.

15. Verfahren zum Herstellen einer Vorrichtung zum Desinfizieren von Wasser, wobei das Verfahren umfasst:
- Bilden einer Kathodenkammer und eines Laugenbasisbehälters in einem ersten monolithischen Strukturelement;
- Bilden einer Anodenkammer und einer Mischkammer in einem zweiten monolithischen Strukturelement;
- Installieren einer Kathode in der Kathodenkammer;
- Installieren einer Anode in der Anodenkammer;
- Einspannen einer ionendurchlässigen Membran zwischen der Kathodenkammer im ersten monolithischen Strukturelement und der Anodenkammer im zweiten monolithischen Strukturelement, so dass eine Elektrolysezelle gebildet wird;
- Bereitstellen eines Wasserbehälters zum Speichern von zu desinfizierendem Wasser;
- Bereitstellen eines Salzbehälters;
- Verbinden des Salzbehälters mit dem Wasserbehälter, so dass ein Salz, wenn es in dem Salzbehälter aufbewahrt wird, in vom Wasserbehälter aufgenommenem Wasser gelöst wird, um eine Salzlösung zu erhalten;
- Anschließen des Salzbehälters an die Anodenkammer, um die Salzlösung in die Anodenkammer zu leiten;
- Anschließen des Laugenbehälters an die Kathodenkammer, um eine aus der Kathodenkammer extrahierte Lauge zu lagern;
- Verbinden der Mischkammer mit dem Wasserbehälter und mit der Anodenkammer, so dass Wasser aus dem Wasserbehälter im Betrieb der Vorrichtung mit einer in der Anodenkammer durch Elektrolyse der Salzlösung gebildeten Desinfektionsverbindung gemischt und desinfiziert wird;
- Bereitstellen eines Einlasses zum Aufnehmen von zu desinfizierendem Wasser und zum Hinzufügen des aufgenommenen Wassers zu dem Wasserbehälter, und
- Bereitstellen eines Auslasses zum Bereitstellen von desinfiziertem Wasser, das aus der Mischkammer entnommen wird.

## Revendications

1. Dispositif (1) pour désinfecter l'eau, le dispositif comprenant :
- un réservoir d'eau (2) pour stocker l'eau à désinfecter ;
- une cellule électrolytique (4) comprenant une chambre d'anode (5) et une chambre de cathode (6) séparées par une membrane perméable aux ions (7) ;
- un réservoir de sel (3) conçu pour dissoudre un sel (8), quand stocké dans le réservoir de sel, dans l'eau reçue en provenance du réservoir d'eau pour obtenir une solution saline et pour délivrer ladite solution saline à ladite chambre d'anode (5) ;
- un réservoir de base caustique (23), couplé de manière opérationnelle à ladite chambre de cathode (6) pour stocker une base caustique extraite à partir de ladite chambre de cathode (6) ;
- une chambre de mélange (16) en communication à fluide avec ledit réservoir d'eau (2) et ladite chambre d'anode (5), de sorte que l'eau provenant du réservoir d'eau (2) est, lors du fonctionnement du dispositif, mélangée avec et désinfectée par un composé désinfectant formé dans la chambre d'anode par électrolyse de la solution saline ;
- une entrée (11) pour recevoir l'eau à désinfecter et pour ajouter l'eau reçue audit réservoir d'eau (2), et
- une sortie (15) pour fournir l'eau désinfectée extraite à partir de la chambre de mélange (16),
dans lequel ladite chambre de cathode (6) et ledit réservoir de base caustique (23) sont formés d'un seul tenant dans un premier élément structurel monolithique (A),
dans lequel ladite chambre d'anode (5) et ladite chambre de mélange (16) sont formées d'un seul tenant dans un second élément structurel monolithique (B),
dans lequel ledit premier élément structurel monolithique (A) et ledit second élément structurel monolithique (B) sont conçus pour être attachés de façon amovible l'un à l'autre, de façon à serrer la membrane perméable aux ions (7) entre le premier élément structurel monolithique (A) et le second élément structurel monolithique (B), et de façon à permettre l'accès à la membrane perméable aux ions (7) en séparant le premier élément structurel monolithique et le second élément structurel monolithique quand attachés l'un à l'autre.

2. Dispositif selon la revendication 1, dans lequel ledit réservoir d'eau (2) et/ou ledit réservoir de sel (3) sont formés dans le premier élément structurel monolithique (A), ou dans le second élément structurel monolithique (B), ou sont formés par des parties complémentaires dans le premier élément structurel monolithique (A) et le second élément structurel monolithique (B) qui, ensemble, forment le réservoir d'eau (2) et/ou le réservoir de sel (3) quand les éléments structurels (A, B) sont attachés l'un à l'autre.

3. Dispositif selon l'une quelconque des revendications précédentes, dans lequel ledit premier élément structurel monolithique (A) et ledit second élément structurel monolithique (B) sont fabriqués par moulage par injection.

4. Dispositif selon l'une quelconque des revendications précédentes, comprenant un segment de tube venturi (17) pour recevoir un flux d'eau provenant d'une première extrémité dudit segment de tube venturi jusqu'à une seconde extrémité dudit segment de tube venturi, ledit segment de tube venturi (17) étant couplé à ladite entrée (11) de sorte que l'entrée (11) est alimentée par le flux dans le segment de tube venturi et ledit segment de tube venturi (17) étant couplé à ladite sortie (15) de sorte que l'eau désinfectée provenant de la sortie (12) est fusionnée en retour dans le flux dans le segment de tube venturi, et de sorte qu'un flux d'eau provenant du segment de tube venturi (17) jusqu'à l'entrée (11) et un flux d'eau provenant de la sortie (15) jusqu'au segment de tube venturi (17) sont entraînés par un gradient de pression provoqué par l'effet venturi.

5. Dispositif selon l'une quelconque des revendications précédentes, comprenant une pompe (24) pour pomper la base caustique à partir de la chambre de cathode (6) jusqu'au réservoir de base caustique (23).

6. Dispositif selon l'une quelconque des revendications précédentes, comprenant un conduit de fluide caustique (27) reliant de manière opérationnelle le réservoir de base caustique (23) à la chambre de mélange (16) de façon à mélanger le fluide de base caustique stocké dans le réservoir de base caustique (23) avec l'eau désinfectée dans la chambre de mélange (16).

7. Dispositif selon l'une quelconque des revendications précédentes, dans lequel ledit conduit de fluide caustique (27) comprend une pompe (28) pour pomper le fluide de base caustique provenant du réservoir de base caustique (23) jusqu'à la chambre de mélange (16).

8. Dispositif selon l'une quelconque des revendications précédentes, dans lequel ledit sel est un sel d'halogène, un sel de chlorure, un sel de fluorure, un sel de sodium, un sel de potassium, et/ou du chlorure de sodium.

9. Dispositif selon l'une quelconque des revendications précédentes, comprenant un robinet à flotteur (13) pour maintenir un niveau d'eau dans le réservoir d'eau (2) à un niveau cible prédéterminé (14) en bloquant une alimentation en eau via l'entrée (11) quand ledit niveau d'eau atteint ou dépasse ledit niveau cible prédéterminé.

10. Dispositif selon l'une quelconque des revendications précédentes, dans lequel ladite entrée (11) et/ou ladite sortie (15) comprennent un clapet anti-retour.

11. Dispositif selon l'une quelconque des revendications précédentes, dans lequel ladite cellule électrolytique comprend une anode (20), positionnée dans la chambre d'anode (5), et une cathode (21), positionnée dans la chambre de cathode (6).

12. Dispositif selon l'une quelconque des revendications précédentes, comprenant un conduit (10) reliant le réservoir de sel (3) à la chambre d'anode (5) pour transporter la solution saline par un flux passif en provenance du réservoir de sel (3) jusqu'à la chambre d'anode (5).

13. Dispositif selon l'une quelconque des revendications précédentes, comprenant un conduit supplémentaire (22) pour permettre à un électrolyte de s'écouler depuis la chambre d'anode (5) jusqu'à la chambre de cathode (6) et pour maintenir un équilibre de fluide entre la chambre d'anode et la chambre de cathode.

14. Dispositif selon l'une quelconque des revendications précédentes, comprenant une sortie de gaz (28) reliée à la chambre de cathode (6) pour décharger du gaz d'hydrogène à partir de la chambre de cathode.

15. Procédé pour fabriquer un dispositif pour désinfecter l'eau, le procédé comprenant :
- la formation d'une chambre de cathode et d'un réservoir de base caustique dans un premier élément structurel monolithique ;
- la formation d'une chambre d'anode et d'une chambre de mélange dans un second élément structurel monolithique ;
- l'installation d'une cathode dans la chambre de cathode ;
- l'installation d'une anode dans la chambre d'anode ;
- le serrage d'une membrane perméable aux ions entre la chambre de cathode dans le premier élément structurel monolithique et la chambre d'anode dans le second élément structurel monolithique de sorte qu'une cellule électrolytique est formée ;
- la fourniture d'un réservoir d'eau pour stocker l'eau à désinfecter ;
- la fourniture d'un réservoir de sel ;
- le raccordement du réservoir de sel au réservoir d'eau de sorte qu'un sel, quand stocké dans le réservoir de sel, est dissous dans l'eau reçue en provenance du réservoir d'eau pour obtenir une solution saline ;
- le raccordement du réservoir de sel à la chambre d'anode pour amener la solution saline à la chambre d'anode ;
- le raccordement du réservoir de base caustique à la chambre de cathode pour stocker une base caustique extraite à partir de la chambre de cathode ;
- le raccordement de la chambre de mélange au réservoir d'eau et à la chambre d'anode, de sorte que l'eau provenant du réservoir d'eau est, lors du fonctionnement du dispositif, mélangée avec et désinfectée par un composé désinfectant formé dans la chambre d'anode par électrolyse de la solution saline ;
- la fourniture d'une entrée pour recevoir l'eau à désinfecter et pour ajouter l'eau reçue audit réservoir d'eau, et
- la fourniture d'une sortie pour fournir l'eau désinfectée extraite depuis la chambre de mélange.
